# FASCICULE DE BREVET EUROPEEN

(11) **EP 3 760 475 B1**
(45) Date de publication et mention de la délivrance du brevet: **06.10.2021**
(21) Numéro de dépôt: 20182132.9
(22) Date de dépôt: 25.06.2020
(51) Int. Cl.: B60M 1/12, B60M 1/28, G01L 5/107

(54) **DISPOSITIF ET PROCÉDÉ DE DÉTERMINATION D'UNE TENSION MÉCANIQUE D'UN FIL DE CONTACT D'UNE CATÉNAIRE**
VORRICHTUNG UND VERFAHREN ZUR BESTIMMUNG EINER MECHANISCHEN SPANNUNG EINES KONTAKTDRAHTS EINER OBERLEITUNG
DEVICE AND METHOD FOR DETERMINING THE MECHANICAL STRESS OF A CONTACT WIRE OF AN OVERHEAD LINE

(30) Priorité: 04.07.2019 FR 1907456
(43) Date de publication de la demande: 06.01.2021
(73) Titulaire: 4NRJ, 41260 La Chaussée-Saint-Victor (FR)
(72) Inventeur: GASSELIN, Benoît, 41000 BLOIS (FR)
(74) Mandataire: Lequien, Philippe

(56) Documents cités:
- EP-A1- 2 572 926
- WO-A2-99/67612
- FR-A1- 2 711 425
- US-A- 2 444 245

## Description

Le domaine de l'invention est celui de la conception et de la fabrication des équipements de maintenance pour les installations ferroviaires.

Plus précisément, l'invention concerne un dispositif de maintenance d'équipements pour l'alimentation en courant électrique de locomotrices de trains circulant sur une voie ferrée.

Dans le domaine de l'invention, il est connu de transmettre du courant électrique au train circulant sur une voie ferrée par l'intermédiaire d'au moins un fil de contact au-dessus de la voie ferrée.

Un tel fil de contact alimente en courant des pantographes qui sont situés sur la partie supérieure d'une locomotrice. Le pantographe est un dispositif qui permet à une locomotrice de capter le courant par frottement sur le fil de contact d'une caténaire.

Un ou plusieurs fils de contact peuvent être suspendus à un câble porteur par l'intermédiaire d'une succession de câbles verticaux dénommés pendules, dont les longueurs sont adaptées à maintenir le fil de contact sensiblement horizontal. L'ensemble formé par le fil de contact, les pendules et le câble porteur est classiquement désigné par le terme « caténaire » ou par l'expression « ligne aérienne de contact ».

Une telle caténaire est supportée au-dessus de la voie ferrée par des poteaux de support disposés, de loin en loin, le long de la voie ferrée.

Un fil de contact d'une caténaire se présente classiquement sous la forme d'un élément longitudinal, muni de préférence de deux rainures latérales et longitudinales de fixation pour permettre, en particulier, la liaison du fil de contact avec les pendules de la caténaire ou un câble porteur auxiliaire.

Bien entendu, au fur et à mesure des passages des trains, les pantographes des locomotrices frottent sur la face inférieure des fils de contact engendrant une usure de celui-ci. En pratique, cette usure se traduit par un méplat qui se forme sur la face inférieure du fil de contact, diminué en son épaisseur.

Les caractéristiques d'un fil de contact évoluent ainsi avec le temps et l'usure, et il est important de les contrôler périodiquement, de manière à s'assurer du bon état de fonctionnement du fil de contact ou à programmer une opération de maintenance adéquate.

La tension mécanique du fil de contact constitue elle aussi une caractéristique importante pour s'assurer de l'état d'un réseau ferré.

Il n'est pas connu de matériel particulièrement adapté pour réaliser une telle mesure de tension mécanique sur le fil de contact d'une caténaire d'une voie ferrée, ce fil de contact étant situé à plusieurs mètres de hauteur.

Il est toutefois connu des tensiomètres à butée mécanique qui permettent de déterminer cette tension mécanique.

Ces tensiomètres à butée mécanique comprennent un bâti prenant la forme d'un T.

Le bâti présente ainsi :
- une partie centrale ;
- deux bras s'étendant à partir d'une extrémité supérieure de la partie centrale, et de part et d'autre de cette partie centrale.

Ce bâti est susceptible d'être suspendu sur un fil de contact d'une caténaire. En effet, chacun des bras présente des butées fixes en dessous desquelles le fil de contact est apte à être inséré, et à venir en contact avec les butées fixes pour suspendre le bâti.

Sur la partie centrale du bâti, une tête d'appui est destinée à venir en contact avec le fil de contact pour lui faire prendre un angle. Cette tête d'appui est mobile selon un axe de translation situé entre les deux butées fixes, et destinée à être perpendiculaire à une section du fil de contact s'étendant entre les butées.

Cette tête d'appui est plus précisément montée à l'extrémité d'une vis actionnable à l'aide d'un volant de serrage. Le volant permet plus particulièrement de faire translater la tête d'appui pour qu'elle vienne appuyer sur le fil de contact.

La partie centrale présente également une butée centrale, opposée à la tête d'appui. La tête d'appui est destinée à appuyer sur le fil de contact jusqu'à ce qu'il vienne en contact sur la butée centrale. Suite à l'actionnement complet du volant de serrage, le fil de contact prend ainsi un angle prédéterminé.

Chacun des bras du bâti porte une jauge de contrainte qui permet de mesurer l'effort auquel sont soumis les bras du bâti lors de l'application de l'effort sur le fil de contact, une fois que le fil de contact a pris l'angle prédéterminé.

Cette solution, qui peut être utilisée sur le terrain, nécessite l'utilisation d'une nacelle pour pouvoir amener l'opérateur réalisant le contrôle à la hauteur du fil de contact.

Le tensiomètre à butées mécaniques présente également pour désavantage qu'il tend à entraîner une déformation permanente du fil de contact, très souvent constatée après la mesure.

De plus, la mesure implique d'imposer un angle prédéterminé par le jeu des butées. En conséquence, si le fil n'est pas droit ou présente des impacts, alors la géométrie de l'ensemble n'est pas parfaite et la mesure finale se trouve moins précise.

La précision même de l'outil est imparfaite. Ceci entraîne la nécessité de réaliser plusieurs mesures sur différentes parties du fil de contact pour en améliorer la justesse du résultat final.

L'outil doit en plus être retourné pour prendre une deuxième mesure sur chaque point et, malgré cela, une imprécision persiste et la dispersion des mesures n'est au final pas acceptable.

Il est important de noter que la mesure de la tension à l'aide d'un tel outil est faussée dans le cas où le fil de contact est usé. Il est en effet difficile de prendre en compte ce paramètre et de donner un résultat sûr.

Enfin, il peut être noté que l'opération de mise en contrainte à l'aide de cet outil est fastidieuse, le volant de serrage devant être actionné manuellement par l'utilisateur.

Le document WO99/67612 A2 divulgue un dispositif de détermination d'une tension mécanique réelle d'un fil de contact d'une caténaire selon l'état de la technique.

L'invention a notamment pour objectif de pallier les inconvénients de l'art antérieur.

Plus précisément, l'invention a pour objectif de proposer un dispositif qui permet de déterminer la tension mécanique réelle d'un fil de contact d'une caténaire.

L'invention a également pour objectif de fournir un tel dispositif qui permette l'obtention de la tension mécanique réelle de manière simple et sécurisée pour l'opérateur qui utilise le dispositif, et plus particulièrement un dispositif qui permette de réaliser une mesure de la tension mécanique depuis le sol, sans l'utilisation d'un appareil élévateur.

L'invention a encore pour objectif de fournir un tel dispositif qui permette une détermination d'une tension mécanique réelle particulièrement précise sans entraîner de déformation permanente du fil de contact après la mesure.

Ces objectifs, ainsi que d'autres qui apparaîtront par la suite, sont atteints grâce à l'invention qui a pour objet un dispositif de détermination d'une tension mécanique réelle d'un fil de contact d'une caténaire s'étendant au-dessus d'une voie ferrée, le dispositif comprenant :
- des moyens de mise en suspension du dispositif sur le fil de contact, les moyens de mise en suspension comprenant deux butées dont une première butée fixe et une seconde butée fixe destinées à reposer sur le fil de contact ;
- un organe d'application d'un effort de flexion comprenant une tête d'appui mobile selon un axe de translation situé entre les deux butées et destiné à être perpendiculaire à une section du fil de contact s'étendant entre les deux butées, la tête d'appui étant susceptible de faire prendre un angle au fil de contact situé entre les deux butées ;
caractérisé en ce que l'organe d'application d'un effort de flexion comprend un moteur électrique entraînant en mobilité la tête d'appui, le dispositif comprenant :
- un capteur de force mesurant des forces appliquées par la tête d'appui ;
- des moyens de mesure d'une position de la tête d'appui le long de l'axe de translation ;
et en ce qu'il comprend un système électronique comprenant :
- des moyens de pilotage du moteur électrique configurés pour entraîner la tête d'appui à au moins deux positions distinctes correspondant à deux forces appliquées différentes dans lesquelles le fil de contact prend un angle ;
- des premiers moyens de calcul d'une raideur calculée du fil de contact à partir d'une différence entre les deux positions distinctes ;
- des deuxièmes moyens de calcul de la tension mécanique réelle du fil de contact à partir de la raideur calculée et d'une fonction de conversion d'une raideur en une tension mécanique.

Grâce au dispositif de détermination d'une tension mécanique réelle selon l'invention, un opérateur dispose d'un outil performant lui permettant d'obtenir cette tension réelle tout en bénéficiant de conditions de réalisation de la mesure confortables.

De plus, la tension réelle déterminée se révèle particulièrement précise.

En effet, grâce au principe de l'invention, la tension du fil de contact est déterminée par l'application d'un effort de flexion sur trois points à l'aide du dispositif qui est animé par un moteur électrique.

Une telle détermination se révèle pratique pour l'utilisateur qui n'a pas à réaliser une action fastidieuse pour déterminer la tension mécanique du fil de contact.

De plus, la détermination de la tension mécanique du fil de contact est réalisée par l'application d'un effort de flexion sur trois points. Lors de la flexion, le dispositif permet de mesurer les déplacements générés en fonction des forces radiales appliquées.

Le système électronique du dispositif a en effet pour particularité d'entraîner la tête d'appui à au moins deux positions distinctes qui correspondent à deux forces appliquées différentes.

Le déplacement mesuré entre les deux positions (résultantes de l'application de deux forces différentes) permet aux premiers moyens de calculs de déterminer la raideur calculée réelle du fil de contact. Par la suite, les deuxièmes moyens de calcul permettent d'obtenir la tension mécanique réelle à l'aide de la raideur calculée par le biais d'au moins une fonction de conversion qui est, bien entendu, renseignée au préalable dans le système électronique du dispositif de détermination selon l'invention.

Cette méthode offre pour avantage de permettre l'obtention d'une tension mécanique réelle pour les fils de contact. En effet, si le fil de contact est usé alors son état d'usure peut être déterminé par le dispositif en mesurant l'épaisseur du fil de contact, et en intégrant cette épaisseur dans le calcul réalisé par les deuxièmes moyens de calcul. Tel que cela est détaillé par la suite, ce niveau d'usure peut être déterminé grâce à la tête d'appui et au capteur de force.

Selon un mode de réalisation préférentiel, le dispositif comprend une perche et un bâti porté par la perche, le bâti présentant les moyens de suspension, l'organe d'application d'un effort de flexion, le capteur de force, et les moyens de mesure.

La détermination de la tension mécanique réelle du fil de contact à l'aide du dispositif selon l'invention se révèle ainsi particulièrement simple à réaliser par un opérateur.

En effet, il suffit à cet opérateur de se positionner sous le fil de contact pour venir suspendre le bâti au fil de contact depuis la voie ferrée. Cet opérateur n'a alors pas besoin d'utiliser un appareil élévateur pour venir au même niveau du fil de contact.

Dans ce cas, le système électronique comprend avantageusement une unité électronique mobile présentant un écran, l'unité électronique communiquant sans fil avec le bâti.

Grâce à cette unité électronique, l'opérateur peut aisément obtenir les informations recherchées, dont la tension mécanique réelle qui peut être affichée sur l'écran depuis le sol.

Ainsi, il n'a pas à retirer le bâti suspendu depuis le fil de contact pour venir lire une information qui serait située sur le bâti même.

De manière avantageuse, le dispositif comprend des moyens de couplage et de découplage du bâti avec la perche, le bâti comprenant une batterie électrique.

Cette conception permet de désassembler la perche du bâti quand ce dernier est suspendu au fil de contact.

Le fonctionnement du dispositif et plus particulièrement la détermination de la tension mécanique réelle du fil de contact ne sont alors ni impactés par le poids de la perche, ni par toute action que l'opérateur pourrait réaliser sur la perche pendant la mesure et qui impacterait la manière dont le bâti opère pour obtenir les mesures.

Aussi, grâce à cette conception, le bâti peut fonctionner de manière autonome en étant suspendu sur un fil de contact.

Selon une conception avantageuse, les moyens de couplage et de découplage comprennent un actionneur de confirmation d'un couplage, l'actionneur étant couplé au système électronique et les moyens de pilotage du moteur électrique étant également configurés pour exercer un effort de maintien du bâti dans une position suspendue en l'absence d'une activation de l'actionneur.

Cette conception permet de sécuriser le bâti sur le fil de contact en l'absence du couplage du bâti avec la perche.

En effet, quand un opérateur désassemble la perche du bâti après avoir suspendu ce dernier, alors le bâti ne peut pas tomber. Ce n'est que lorsque la perche est de nouveau couplée avec le bâti que le système électronique et les moyens de pilotage cessent alors d'exercer un effort de maintien du bâti dans la position suspendue sur le fil de contact.

Selon un mode de réalisation préféré, le système électronique est programmé avec une pluralité de fonctions de conversion d'une raideur en une tension mécanique, chaque fonction de conversion étant spécifique d'un type de fil de contact et/ou d'un état d'usure du fil de contact, le système électronique comprenant des moyens de sélection de l'une des fonctions de conversion à mettre en œuvre par les deuxièmes moyens de calcul.

Grâce à ce mode de réalisation, le dispositif de détermination d'une tension mécanique réelle selon l'invention peut être utilisé sur différents types de fils de contact (par exemple des fils de contact de différentes tailles), autorisant ainsi une grande polyvalence d'utilisation pour le dispositif.

De plus, le niveau d'usure peut alors spécifiquement concourir à la sélection de la fonction de conversion la mieux adaptée. Une bonne intégration du niveau d'usure est importante du fait qu'il a été remarqué que l'usure peut avoir un fort impact sur le calcul de la tension mécanique réel.

Dans ce cas et selon une première solution, la ou les fonctions de conversion prennent la forme Y = a.X + b,
où :
- le paramètre Y est la raideur calculée ;
- le paramètre X est la tension mécanique réelle ;
- le paramètre a est un coefficient directeur ;
- le paramètre b est l'ordonnée à l'origine.

Différentes séries de mesures sur des fils de contact à plusieurs états (neuf, miusure, et usé) ont amené à constater des rapports entre les valeurs mesurées et les tensions mécaniques réelles qui font preuve d'une linéarité presque parfaite. La détermination expérimentale d'une ou de plusieurs fonctions de conversion prenant la forme de fonction affine permet ainsi une détermination particulièrement précise de la tension mécanique réelle du fil de contact tout en facilitant la mise en œuvre de la méthode de détermination par le dispositif.

Selon une autre solution, la ou chaque fonction de conversion prend la forme d'une table de correspondance entre une raideur et une tension mécanique.

Une telle solution forme un modèle encore plus précis que celui précédemment décrit, mais nécessite de très grandes ressources de mémoires pour le système électronique.

Selon une caractéristique préférentielle, le dispositif présente deux pattes de guidage s'étendant latéralement en biais depuis les butées, les pattes de guidage formant des crochets aptes à permettre un crochetage du fil de contact.

Ces pattes de guidage facilitent la mise en suspension du dispositif sur le fil de contact. En effet, elles permettent de guider le fil de contact jusqu'aux butées des moyens de mise en suspension.

De plus, ces pattes de guidage se révèlent particulièrement utiles pour un opérateur lorsque le dispositif est pourvu d'une perche permettant de porter le bâti. En effet, depuis le sol, un opérateur arrive alors plus aisément à suspendre le dispositif sur le fil de contact grâce au guidage réalisé par les deux pattes de guidage.

Avantageusement, le dispositif comprend un capteur de température du fil de contact, les moyens de corrélation intégrant une mesure de température pour obtenir une tension réelle. Il s'agit plus précisément d'un capteur de température infrarouge orienté vers le fil de contact et mesurant directement sa température.

En cas de mesure d'une section de caténaire non compensée, le fil de contact pend entre deux points fixes et la tension mécanique du câble est dépendante de sa température. Sur une caténaire non compensée et pour un type de montage particulier (nature du fil, section du fil, distance entre les points fixes), une température de référence donnée correspond une tension mécanique.

Grace à la mesure de tension et à la mesure directe de la température, il peut alors être indiqué la tension mesurée et la tension corrélé avec la température.

L'invention a également pour objet un procédé de détermination d'une tension mécanique d'un fil de contact d'une caténaire s'étendant au-dessus d'une voie ferrée, le procédé comprenant :
- une première étape d'application d'un effort de flexion sur une portion du fil de contact à une première force (F1) prédéfinie ;
- une première étape de mesure d'un premier déplacement radial (D1) de la portion du fil de contact engendré lors de la première étape d'application ;
- une deuxième étape d'application d'un effort de flexion sur la portion du fil de contact à une deuxième force (F2) prédéfinie;
- une deuxième étape de mesure d'un deuxième déplacement radial (D2) de la portion du fil de contact engendré lors de la deuxième étape d'application ;
- une première étape de calcul pour déterminer une raideur calculée du fil de contact à partir d'une différence calculée entre le deuxième déplacement radial (D2) et le premier déplacement radial (D1), de la première force (F1) et de la deuxième force (F2) ;
- une deuxième étape de calcul pour déterminer la tension mécanique réelle à partir de la raideur calculée et d'une fonction de conversion.

Le procédé de détermination selon l'invention présente la capacité de déterminer précisément la tension mécanique d'un fil de contact d'une caténaire.

La première étape d'application d'un effort de flexion sur une portion du fil de contact est plus précisément réalisée sur trois points. Plus précisément, un effort de flexion est exercé sur un point central situé entre deux points fixes. Le déplacement radial engendré permet cette détermination précise de la tension mécanique via la raideur calculée, sans engendrer de déformation du fil de contact.

Avantageusement, le procédé comprend une étape préalable de mesure de l'épaisseur du fil de contact, et une étape de sélection de la fonction de conversion, parmi une pluralité de fonctions de conversion, à mettre en œuvre dans la deuxième étape de calcul en fonction d'une épaisseur du fil de contact.

Ainsi, le procédé permet de déterminer la tension mécanique d'un fil de contact usé.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique du dispositif de détermination selon l'invention, le dispositif comprenant un bâti, une perche portant le bâti, et un système électronique comprenant une unité électronique mobile ;
- la figure 2 est une vue en perspective du bâti du dispositif de détermination selon l'invention ;
- la figure 3 est une représentation en perspective du bâti suspendu sur un fil de contact d'une caténaire, un bloc de commande électronique visible sur la figure 2 étant retiré du bâti ;
- la figure 4 est une représentation schématique selon une coupe transversale du bâti de la figure 3 ;
- la figure 5 est une représentation schématique de la mise en suspension du bâti sur un fil de contact d'une caténaire ;
- la figure 6 illustre le procédé de détermination d'une tension selon l'invention.

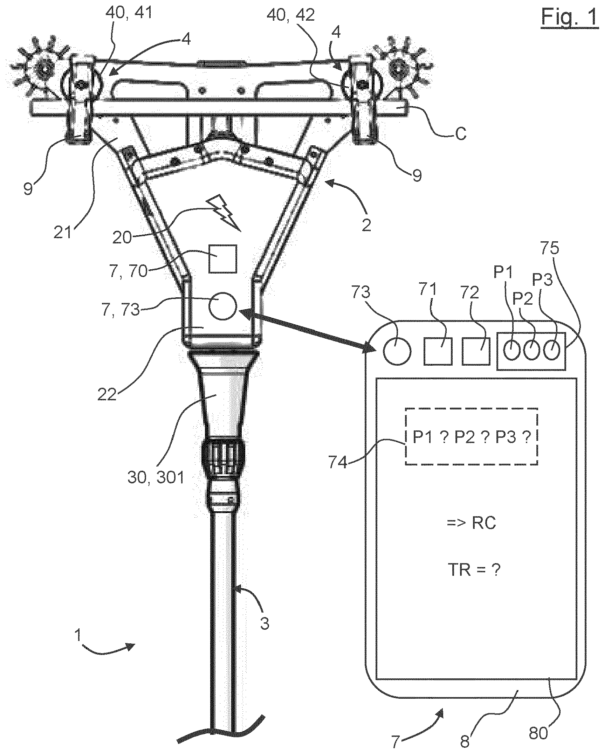

En référence à la figure 1, un dispositif 1 de détermination d'une tension mécanique réelle TR d'un fil de contact C d'une caténaire est représenté.

Le dispositif 1 comprend :
- une perche 3 ;
- un bâti 2 qui comprend, tel que cela est détaillé par la suite, un châssis 21 et un bloc de commande électronique 22 ;
- un système électronique 7 qui comprend une unité électronique 8 mobile, correspondant par exemple à un ordiphone.

La perche 3 permet de porter le bâti 2 depuis le sol.

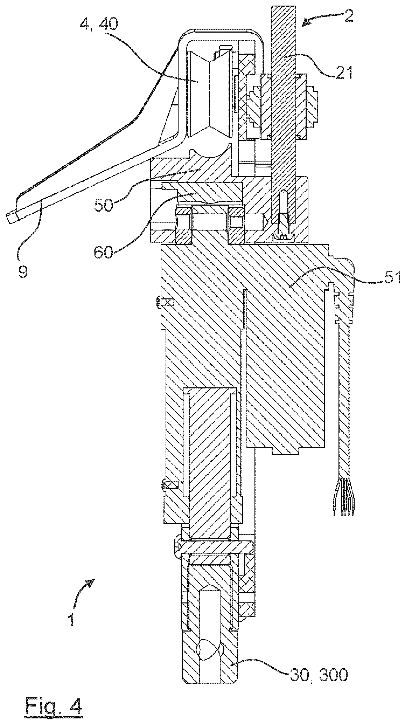

En référence aux figures 1 à 4, le dispositif 1 comprend :
- des moyens de mise en suspension 4 du dispositif 1 sur le fil de contact C ;
- un organe d'application 5 d'un effort de flexion ;
- un capteur de force 60 ;
- des moyens de mesure.

Les moyens de mise en suspension 4, l'organe d'application 5 d'un effort de flexion, le capteur de force 60 et les moyens de mesure sont, selon le présent mode de réalisation, présentés par le bâti 2.

Les moyens de mise en suspension 4 du dispositif 1 sur le fil de contact C permettent ainsi de mettre en suspension le bâti 2 sur le fil de contact C.

Ces moyens de mise en suspension 4 comprennent deux butées 40. Plus particulièrement, ces moyens de mise en suspension 4 comprennent une première butée fixe 41 et une seconde butée fixe 42 qui sont toutes les deux destinées à reposer sur le fil de contact C.

Les butées 40 sont notamment des roulettes fixes qui, tel que cela est décrit plus en détails par la suite, permettent de mettre et de fournir un appui en flexion pour le fil de contact C. Les butées 40 présentent chacune une gorge permettant de centrer le fil de contact C lorsqu'elles sont positionnées dessus.

L'organe d'application 5 d'un effort de flexion comprend quant à lui une tête d'appui 50 qui est mobile selon un axe de translation T.

L'axe de translation T est situé entre les deux butées 40. En d'autres termes, cet axe de translation T est équidistant des butées 40. L'axe de translation T est destiné à être essentiellement perpendiculaire à une section du fil de contact C qui s'étend entre les deux butées 40, et ce lorsque le fil de contact C s'étend de manière essentiellement rectiligne entre les butées 40.

Cette tête d'appui 50 est susceptible de faire prendre un angle au fil de contact C situé entre les deux butées 40.

L'organe d'application 5 d'un effort de flexion comprend également des paliers de guidage linéaire 52 qui permettent d'assurer la bonne translation selon l'axe de translation T de la tête d'appui 50.

Le capteur de force 60 permet de mesurer des forces appliquées par la tête d'appui 50. Ce capteur de force 60 est ainsi destiné à mesurer une force appliquée par la tête d'appui 50 sur le fil de contact C.

Enfin, les moyens de mesure permettent de mesurer la position de la tête d'appui 50 le long de l'axe de translation T.

En d'autres termes, les moyens de mesure permettent de déterminer la position de la tête d'appui 50, et le capteur de force 60 permet de déterminer la force qui est appliquée par la tête d'appui 50 à une position donnée.

Selon le principe de l'invention, l'organe d'application 5 d'un effort de flexion comprend un moteur électrique 51 qui entraîne en mobilité la tête d'appui 50.

Ce moteur électrique 51 prend notamment la forme d'un vérin électrique.

Le vérin électrique est équipé d'un codeur quadratique qui forme les moyens de mesure. En effet, le codeur quadratique permet de connaître le sens et la valeur du déplacement de la tête d'appui 50.

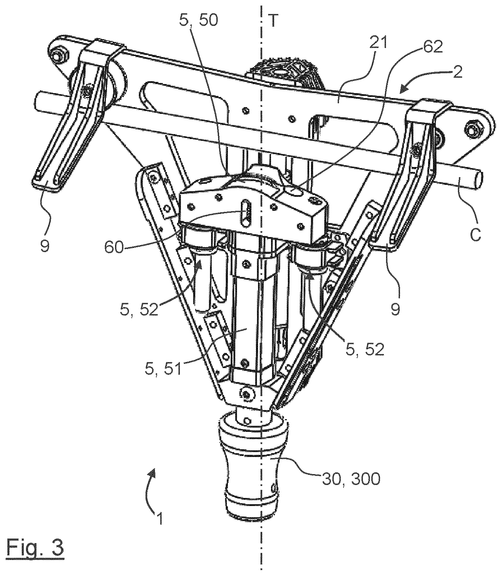

En référence à la figure 3, le dispositif comprend en outre comprend un capteur de température 62 du fil de contact C. Il s'agit plus précisément d'un capteur de température infrarouge orienté directement vers le fil de contact C pour mesure sa température.

Le capteur de température 63 est porté par le bâti 2.

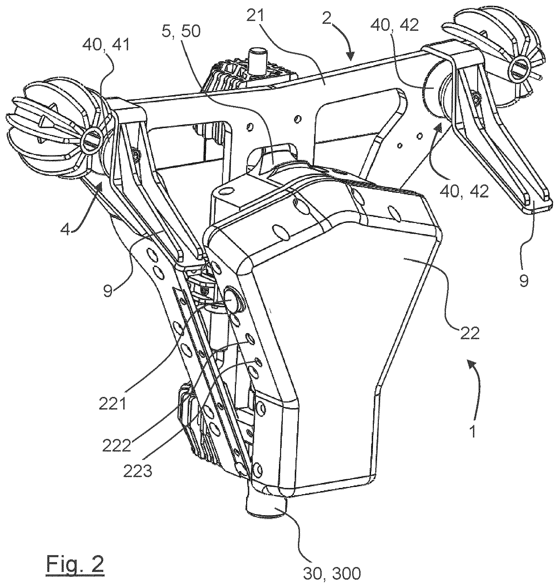

Tel qu'évoqué précédemment, et toujours en référence aux figures 1 et 2, le dispositif 1 comprend un système électronique 7.

Ce système électronique 7 est programmé avec au moins une fonction de conversion P1, P2, P3 d'une raideur en une tension mécanique.

En l'occurrence, le système électronique 7 est programmé avec trois fonctions de conversion P1, P2, P3 et ces fonctions de conversion P1, P2, P3 sont intégrées dans une mémoire 75 du système électronique 7.

En référence à la figure 1, le système électronique 7 comprend :
- des moyens de pilotage 70 du moteur électrique 51 ;
- des premiers moyens de calcul 71 d'une raideur calculée RC du fil de contact C ;
- des deuxièmes moyens de calcul 72 de la tension mécanique réelle TR du fil de contact C à partir de la raideur calculée RC et de l'une des fonctions de conversion P1, P2, P3 d'une raideur en une tension mécanique.

Les moyens de pilotage 70 du moteur électrique 51 sont intégrés dans le bloc de commande électronique 21.

Les moyens de pilotage 70 permettent d'entraîner la tête d'appui 50, à l'aide du moteur électrique 51, à au moins deux positions distinctes correspondant à deux forces appliquées différentes dans lesquelles le fil de contact C prend un angle.

L'angle formé par le fil de contact C n'est ainsi pas prédéfini, et c'est selon ses caractéristiques réelles que les angles qu'il prend sous l'effet de la tête d'appui sont plus ou moins prononcés.

Les premiers moyens de calcul 71 de la raideur calculée RC du fil de contact C réalisent le calcul à partir d'une différence de déplacement de la tête d'appui 50 (et ainsi du fil de contact C) entre les deux positions atteintes par la tête d'appui 50 (ou en d'autres termes les deux angles pris par le fil de contact) lors de l'application de chacun des deux forces appliquées différentes.

Plus précisément, et tel que cela est développé par la suite, les premiers moyens de calcul utilisent la force appliquée par la tête d'appui 50 et mesurée par le capteur de force 60 à chacune des positions distinctes.

Selon le présent mode de réalisation, les deuxièmes moyens de calcul 72 intègrent une mesure de température pour obtenir la tension mécanique réelle TR. Cette mesure de température est obtenue par le capteur de température 62 du fil de contact C.

Tel que cela est illustré par la figure 1 et selon le présent mode de réalisation, le système électronique 7 est scindé en deux parties dont une première partie est embarquée dans le bloc de commande électronique 21 du bâti 2 et dont une autre partie est embarquée dans l'unité électronique 8.

Selon d'autres modes de réalisation envisageables, l'ensemble du système électronique 7 peut être embarqué dans le bâti 2.

En référence à la figure 1 et au présent mode de réalisation, le système électronique 7 comprend des moyens de communication sans fil 73.

Ces moyens de communication sans fil 73 sont notamment configurés pour fonctionner par Bluetooth (marque déposée) et permettent une communication bidirectionnelle entre le bâti 2 et l'unité électronique 8.

L'unité électronique 8 embarque les premiers moyens de calcul 71, les deuxièmes moyens de calcul 72 et la mémoire 75.

Le système électronique 7 comprend en outre des moyens de sélection 74, présentés par l'unité électronique 8. Ces moyens de sélection 74 permettent de sélectionner l'une des fonctions de conversion P1, P2, P3 à mettre en œuvre par les deuxièmes moyens de calcul 72.

L'utilisation d'une pluralité de fonctions de conversion P1, P2, P3, permet d'avoir des fonctions de conversion qui sont spécifiques d'un seul type de fil de contact C.

Les moyens de sélection 74 peuvent comprendre une interface de sélection permettant d'indiquer le type de fil de contact C sur lequel est utilisé le dispositif pour sélectionner une fonction de conversion adaptée.

Ainsi, en fonction des calibres des fils de contact C analysés, la fonction de conversion adéquate peut être sélectionnée par le biais de l'interface de sélection.

L'unité électronique 8 mobile présente un écran 80. Cet écran 80 permet d'afficher et de sélectionner des informations depuis l'unité électronique 8.

En l'occurrence, et tel que cela est illustré par la figure 1, l'écran 80 de l'unité électronique 8 permet d'afficher l'interface de sélection des moyens de sélection 74, puis d'afficher la tension réelle TR obtenue par les deuxièmes moyens de calcul 72.

Le bâti 2 comprend ainsi le châssis 21 et le bloc de commande électronique 22.

Selon le présent mode de réalisation, le bloc de commande électronique 22 intègre également une batterie électrique 20.

En référence à la figure 2, le bloc commande électronique 22 est pourvu :
- d'un interrupteur marche/arrêt 221 ;
- d'une prise de recharge 222 de la batterie électrique 20 ;
- d'un voyant de statut 223 permettant à un opérateur d'avoir un retour d'information visuelle sur le statut (appareil allumé, en fonctionnement ou en défaut).

La batterie électrique 20 permet de rendre autonome le bâti 2.

Le dispositif 1 comprend les moyens de couplage et de découplage 30 du bâti 2 avec la perche 3. Ces moyens de couplage et de découplage 30 permettent de désassembler la perche 3 du bâti 2 quand ce dernier est suspendu sur le fil de contact C.

Plus précisément et tel que cela est illustré par les figures 1 à 4, les moyens de couplage et de découplage 30 comprennent un cône aimanté 300 présenté par le bâti 2, et un entonnoir 301 complémentaire du cône aimanté 300, l'entonnoir 301 étant présenté par la perche 3.

Les moyens de couplage et de découplage 30 comprennent en outre un actionneur de confirmation d'un couplage (non représenté). Cet actionneur est couplé au système électronique 7 et les moyens de pilotage 70 du moteur électrique 51 sont configurés pour exercer un effort de maintien du bâti 2 dans une position suspendue en l'absence d'une activation de l'actionneur.

Après avoir suspendu le bâti 2 sur le fil de contact C à l'aide de la perche 3, le découplage de la perche 3 par le biais des moyens de couplage et de découplage 30 entraîne une modification de l'état de l'actionneur, ce qui, par le biais du système électronique 7, permet au moyen de pilotage 70 d'exercer un effort de maintien du bâti 2 sur le fil de contact C.

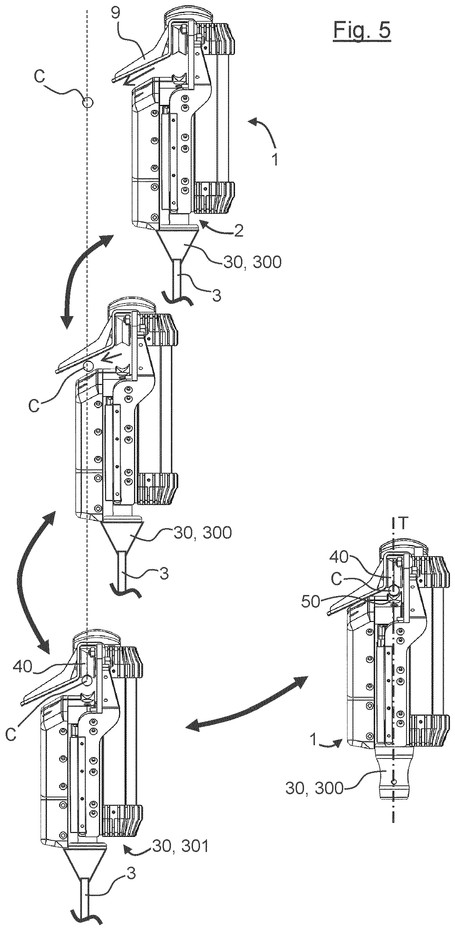

Cet effort de maintien correspond simplement à un déplacement de la tête d'appui 50 pour venir maintenir captif le fil de contact C. Une telle situation est représentée sur la figure 5.

Si un opérateur couple de nouveau la perche 3 au bâti 2, alors l'actionneur de confirmation d'un couplage voit son état modifié et les moyens de pilotage 70 cessent alors d'exercer un effort de maintien du bâti 2 dans une position suspendue sur le fil de contact C.

On comprend ainsi que la batterie électrique 20 du bâti 2 permet au bâti 2 d'agir en autonomie vis-à-vis de l'approvisionnement en énergie suite au découplage de la perche 3 du bâti 2.

En référence aux figures 1 à 4, ainsi qu'à la figure 5, le dispositif 1 comprend deux pattes de guidage 9 qui s'étendent latéralement en biais depuis les butées 40. Ces pattes de guidage 9 forment des crochets aptes à permettre un crochetage du fil de contact C tel que cela est illustré par la figure 5.

En référence à la figure 5, la mise en place du dispositif 1 sur un fil de contact C est décrite ci-après.

Les trois premières étapes (décrites ci-après) de mise en place du bâti 2 sur le fil de contact C sont réalisées à l'aide d'une perche 3.

Bien entendu, le bâti 2 peut être positionné manuellement sur le fil de contact C, selon un autre mode de réalisation, dans lequel l'opérateur doit le manipuler directement. Dans ce cas, l'opérateur a besoin d'un appareil de levage pour atteindre le fil de contact C.

Pour mettre en place le dispositif 1, l'opérateur doit positionner le bâti 2 de manière à être en vis-à-vis d'une ouverture située directement en dessous des deux pattes de guidage 9 qui s'étendent latéralement en biais depuis les butées 40. L'ouverture est plus précisément située entre les pattes de guidage 9 qui forment des crochets, et la tête d'appui 50.

Le dispositif 1 est ensuite déplacé de manière à engager le fil de contact C sous les pattes de guidage 9.

Le dispositif 1 est encore déplacé pour positionner le fil de contact C sous les butées 40, et plus précisément à l'intérieur des gorges présentées par chacune des butées 40.

Dans cette situation, le bâti 2 est alors suspendu sur le fil de contact C. L'opérateur peut alors découpler la perche 3 du bâti 2. L'actionneur de confirmation d'un couplage des moyens de couplage et de découplage 30 cesse d'être activé. Ceci provoque directement la remontée de la tête d'appui 50 sous l'effet des moyens de pilotage 70 du moteur électrique 51 pour exercer un effort de maintien du bâti 2 dans la position suspendue.

On comprend que pour retirer le dispositif 1 du fil de contact C, un opérateur doit réaliser l'opération en sens inverse de celle des éléments décrits.

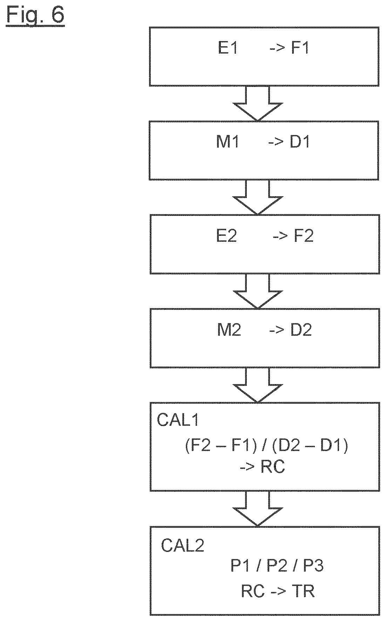

En référence aux figures 1 et 6, le procédé de détermination d'une tension réelle TR d'un fil de contact C d'une caténaire est décrit. Ce procédé de détermination est mis en œuvre par le dispositif 1 selon l'invention décrit précédemment.

Le procédé comprend une première étape d'application E1 d'un effort de flexion sur une portion du fil de contact C à une première force F1 prédéfinie.

La première force F1 prédéfinie est non nulle. Par cette première étape d'application E1, le fil de contact C prend un angle qui est fonction des caractéristiques du fil de contact C et de la première force F1 prédéfinie.

La première étape E1 est suivie d'une première étape de mesure M1 d'un premier déplacement radial D1 de la portion du fil de contact C engendrée lors de la première étape d'application E1.

Le premier déplacement radial D1 correspond notamment à la distance de déplacement de la tête d'appui 50 entre la position dans laquelle la tête d'appui 50 est au contact avec le fil de contact C et/ou ce fil de contact C ne prend pas un angle sous l'effet du dispositif 1.

Le premier déplacement radial D1 est enregistré.

Le procédé comprend ensuite, de manière similaire, une deuxième étape d'application E2 d'un effort de flexion sur la portion du fil de contact C à une deuxième force F2 prédéfinie.

La deuxième force F2 prédéfinie est non nulle et avantageusement supérieure à la première force F1 prédéfinie.

A titre d'exemple, la première force F1 peut être équivalente à 10 daN et la deuxième force F2 peut être équivalente à 70 daN.

Cette deuxième étape d'application E2 est suivie de la deuxième étape de mesure M2 d'un deuxième déplacement radial D2 de la portion du fil de contact C engendré lors de la deuxième étape E2 d'application.

Cette étape de mesure M2 d'un deuxième déplacement radial D2 permet l'enregistrement de la mesure du deuxième déplacement radial D2.

Suite à ces étapes, le procédé comprend une première étape de calcul CAL1 pour déterminer une raideur calculée RC du fil de contact C à partir :
- d'une différence calculée entre le deuxième déplacement radial D2 et le premier déplacement radial D1 ;
- de la première force F1 ;
- de la deuxième force F2.

Le calcul effectué est le suivant :RC = (F2 - F1)/(D2 - D1).

Cette première étape de calcul CAL1 est mise en œuvre par les premiers moyens de calcul 71.

Le procédé comprend enfin une deuxième étape de calcul CAL2 pour déterminer la tension réelle TR du fil de contact C à partir de la raideur calculée RC et d'une fonction de conversion P1, P2, P3...

Cette deuxième étape de calcul CAL2 est mise en œuvre par les deuxièmes moyens de calcul 72.

Selon le présent mode de réalisation, les fonctions de conversion P1, P2, P3 prennent la forme Y = a.X + b,
où :
- le paramètre Y est la raideur calculée RC ;
- le paramètre X est la tension mécanique réelle TR ;
- le paramètre a est un coefficient directeur ;
- le paramètre b est l'ordonnée à l'origine.

Différentes séries de mesures de la tension mécanique et de la raideur sur des fils de contact ont permis de remarquer que la courbe d'évolution de la tension mécanique en fonction de la raideur fait preuve d'une linéarité presque parfaite. Une droite peut être obtenue par le recours à une droite des moindres carrés, ce qui permet l'obtention des paramètres a et b spécifiques d'un fil de contact.

Le calcul effectué pour obtenir la tension mécanique réelle correspond ainsi à : Tension réelle TR = (Raideur calculée RC - b) / a

Il est ainsi obtenu la tension réelle TR du fil de contact C.

Selon un autre mode de réalisation envisageable, la ou chaque fonction de conversion P1, P2, P3 prend la forme d'une table de correspondance entre une raideur et une tension mécanique.

Une telle table de correspondance peut être utile dans le cas où le comportement de la tension mécanique du fil de contact C par rapport à sa raideur ne serait pas transposable à celui d'une fonction mathématique déterminable.

Le dispositif selon l'invention permet également d'estimer l'usure du fil de contact C.

Le procédé comprend ainsi une étape préalable de mesure de l'épaisseur du fil de contact C, et la deuxième étape de calcul CAL2 intègre la mesure de l'épaisseur du fil de contact C pour la détermination de la tension réelle TR.

A cet effet, il a été remarqué que l'usure du fil de contact C influe sur la courbe d'évolution de la tension mécanique en fonction de la raideur, mais que pour une usure donnée une linéarité presque parfaite peut toujours être observée.

Ainsi, pour un type de fil de contact C plusieurs fonctions de conversion P1, P2, P3 sont déterminées pour différents état d'usure du fil de contact C.

Ces fonctions de conversion prennent chacune la forme Y = a.X + b, et correspondent par exemple à un état neuf P1, à une usure de 50% P2, et à une usure de 100% P3.

Le dispositif selon l'invention permet ainsi de déterminer ce niveau d'usure de la manière décrite ci-après.

Quand le dispositif est suspendu sur le fil de contact C, le fil de contact s'étend sensiblement de manière rectiligne entre les deux butées 40.

Il est important de noter qu'à cet instant, la face d'usure du fil de contact, le méplat, est situé en dessous du fil de contact C.

De cette manière, il est possible, à l'aide du dispositif, de déterminer :
- l'épaisseur du fil de contact C ;
- le niveau d'usure du fil de contact C.

Le niveau d'usure peut être obtenu en comparant la position de la tête d'appui 50 quand elle arrive directement en contact avec le fil de contact C, sans appliquer de pression, à la position que devrait atteindre la tête d'appui 50 si le fil de contact était neuf.

Pour intégrer ce niveau d'usure obtenu dans la deuxième étape de calcul CAL2. Le procédé comprend également, après l'étape préalable de mesure de l'épaisseur du fil de contact C, une étape de sélection de l'une des fonctions de conversion P1, P2, P3, parmi la pluralité de fonctions de conversion P1, P2, P3, à mettre en œuvre dans la deuxième étape de calcul CAL2 en fonction de l'épaisseur du fil de contact C.

Cette étape de sélection de l'une des fonctions de conversion P1, P2, P3 est mise en œuvre par les moyens de sélection 74.

Le dispositif 1 peut également être utilisé pour un fil de contact C qui serait un câble multi-brins.

Un câble multi-brins est composé d'un certain nombre de fils toronnés. Lors de la mise en pression du câble multi-brins par la tête d'appui 50, les bras subissent des mini-déplacements les uns par rapport aux autres. Ces déplacements seraient susceptibles de fausser une mesure de la raideur et donc le calcul de la tension mécanique du câble.

Pour minimiser l'erreur, le procédé selon l'invention peut comprendre :
- une étape préalable, dans laquelle une contrainte maximum est appliquée sur le fil de contact C ;
- une diminution de la contrainte jusqu'à la valeur de précontrainte correspondant à la première étape d'application E1 ;
- le démarrage du cycle précédemment décrit.

Il est important de noter que la contrainte n'est alors jamais relâchée sur le fil de contact C pendant le cycle.

Le cycle de mesure est également répété plusieurs fois sans relâcher la contrainte.

Une moyenne est alors calculée en supplément lors de la première étape de calcul CAL1, bien entendu sans tenir compte de la première mise en contrainte qui a servi au placement des brins les uns par rapport aux autres.

## Revendications

1. Dispositif (1) de détermination d'une tension mécanique réelle (TR) d'un fil de contact (C) d'une caténaire s'étendant au-dessus d'une voie ferrée, le dispositif comprenant :
- des moyens de mise en suspension (4) du dispositif (1) sur le fil de contact (C), les moyens de mise en suspension (4) comprenant deux butées (40) dont une première butée fixe (41) et une seconde butée fixe (42) destinées à reposer sur le fil de contact (C) ;
- un organe d'application (5) d'un effort de flexion comprenant une tête d'appui (50) mobile selon un axe de translation (T) situé entre les deux butées (40) et destiné à être perpendiculaire à une section du fil de contact (C) s'étendant entre les deux butées (40), la tête d'appui (50) étant susceptible de faire prendre un angle au fil de contact (C) situé entre les deux butées (40) ; **caractérisé en ce que** l'organe d'application (5) d'un effort de flexion comprend un moteur électrique (51) entraînant en mobilité la tête d'appui (50), le dispositif (1) comprenant :
- un capteur de force (60) mesurant des forces appliquées par la tête d'appui (50) ;
- des moyens de mesure d'une position de la tête d'appui (50) le long de l'axe de translation (T) ;
et **en ce qu'**il comprend un système électronique (7) comprenant :
- des moyens de pilotage (70) du moteur électrique (51) configurés pour entraîner la tête d'appui (50) à au moins deux positions distinctes correspondant à deux forces appliquées différentes dans lesquelles le fil de contact (C) prend un angle ;
- des premiers moyens de calcul (71) d'une raideur calculée (RC) du fil de contact (C) à partir d'une différence entre les deux positions distinctes ;
- des deuxièmes moyens de calcul (72) de la tension mécanique réelle (TR) du fil de contact (C) à partir de la raideur calculée (RC) et d'une fonction de conversion (P1, P2, P3) d'une raideur en une tension mécanique.

2. Dispositif (1) selon la revendication précédente, **caractérisé en ce que** et **en ce qu'**il comprend une perche (3) et un bâti (2) porté par la perche (3), le bâti (2) présentant les moyens de mise en suspension (4), l'organe d'application (5) d'un effort de flexion, le capteur de force (60), et les moyens de mesure.

3. Dispositif (1) selon la revendication précédente, **caractérisé en ce que** le système électronique (7) comprend une unité électronique (8) mobile présentant un écran (80), l'unité électronique (8) communicant sans fil avec le bâti (2).

4. Dispositif (1) selon l'une quelconque des revendications 2 et 3, **caractérisé en ce qu'**il comprend des moyens de couplage et de découplage (30) du bâti (2) avec la perche (3), le bâti (2) comprenant une batterie électrique (20).

5. Dispositif (1) selon la revendication précédente, **caractérisé en ce que** les moyens de couplage et de découplage (30) comprennent un actionneur de confirmation d'un couplage, l'actionneur étant couplé au système électronique (7) et les moyens de pilotage (70) du moteur électrique (51) étant également configurés pour exercer un effort de maintien du bâti (2) dans une position suspendue en l'absence d'une activation de l'actionneur.

6. Dispositif (1) selon l'une quelconque des revendications précédentes, **caractérisé en ce que** le système électronique (7) est programmé avec une pluralité de fonctions de conversion (P1, P2, P3) d'une raideur en une tension mécanique, chaque fonction de conversion (P1, P2, P3) étant spécifique d'un type de fil de contact (C) et/ou d'un état d'usure du fil de contact (C), le système électronique (7) comprenant des moyens de sélection (74) de l'une des fonctions de conversion (P1, P2, P3) à mettre en œuvre par les deuxièmes moyens de calcul (72).

7. Dispositif (1) selon l'une quelconque des revendications précédentes, **caractérisé en ce que** la ou les fonctions de conversion (P1, P2, P3) prennent la forme Y = a.X + b,
où :
- le paramètre Y est la raideur calculée (RC) ;
- le paramètre X est la tension mécanique réelle (TR) ;
- le paramètre a est un coefficient directeur ;
- le paramètre b est l'ordonnée à l'origine.

8. Dispositif (1) selon l'une quelconque des revendications 1 à 6, **caractérisé en ce que** la ou chaque fonction de conversion (P1, P2, P3) prend la forme d'une table de correspondance entre une raideur et une tension mécanique.

9. Dispositif (1) selon l'une quelconque des revendications précédentes, **caractérisé en ce qu'**il présente deux pattes de guidage (9) s'étendant latéralement en biais depuis les butées (40), les pattes de guidage (9) formant des crochets aptes à permettre un crochetage du fil de contact (C).

10. Dispositif (1) selon l'une quelconque des revendications précédentes, **caractérisé en ce qu'**il comprend un capteur de température (62) du fil de contact (C), les deuxièmes moyens de calcul (72) intégrant une mesure de température pour obtenir la tension mécanique réelle (TR).

11. Procédé de détermination d'une tension mécanique réelle (TR) d'un fil de contact (C) d'une caténaire s'étendant au-dessus d'une voie ferrée, le procédé comprenant :
- une première étape d'application (E1) d'un effort de flexion sur une portion du fil de contact à une première force (F1) prédéfinie ;
- une première étape de mesure (M1) d'un premier déplacement radial (D1) de la portion du fil de contact engendré lors de la première étape d'application ;
- une deuxième étape d'application (E2) d'un effort de flexion sur la portion du fil de contact à une deuxième force (F2) prédéfinie;
- une deuxième étape de mesure (M2) d'un deuxième déplacement radial (D2) de la portion du fil de contact engendré lors de la deuxième étape d'application ;
- une première étape de calcul (CAL1) pour déterminer une raideur calculée (RC) du fil de contact à partir d'une différence calculée entre le deuxième déplacement radial (D2) et le premier déplacement radial (D1), de la première force (F1) et de la deuxième force (F2) ;
- une deuxième étape de calcul (CAL2) pour déterminer la tension mécanique réelle (TR) à partir de la raideur calculée (RC) et d'une fonction de conversion (P1, P2, P3).

12. Procédé selon la revendication précédente, **caractérisé en ce qu'**il comprend une étape préalable de mesure de l'épaisseur du fil de contact (C), et une étape de sélection de la fonction de conversion (P1, P2, P3), parmi une pluralité de fonctions de conversion (P1, P2, P3), à mettre en œuvre dans la deuxième étape de calcul (CAL2) en fonction de l'épaisseur du fil de contact (C).

## Patentansprüche

1. Vorrichtung (1) zur Bestimmung einer Ist-Spannung (TR) eines Fahrdrahtes (C) einer Oberleitung, die sich über ein Eisenbahngleis erstreckt, wobei die Vorrichtung umfasst:
- Aufhängungsmittel (4) der Vorrichtung (1) am Fahrdraht (C), wobei die Aufhängungsmittel (4) zwei Anschläge (40), einen ersten festen Anschlag (41) und einen zweiten festen Anschlag (42), die dazu bestimmt sind, auf dem Fahrdraht (C) aufzuliegen, aufweisen;
- ein Organ (5) zum Aufbringen einer Biegekraft, das einen Stützkopf (50) umfasst, der entlang einer Translationsachse (T) beweglich ist, die sich zwischen den beiden Anschlägen (40) befindet und dazu bestimmt ist, senkrecht zu einem Abschnitt des Fahrdrahtes (C) zu verlaufen, der sich zwischen den beiden Anschlägen (40) erstreckt, wobei der Stützkopf (50) in der Lage ist, den zwischen den beiden Anschlägen (40) befindlichen Fahrdraht (C) einen Winkel einnehmen zu lassen; **dadurch gekennzeichnet, dass** das Organ (5) zum Aufbringen einer Biegekraft einen Elektromotor (51) umfasst, der den Stützkopf (50) beweglich antreibt, wobei die Vorrichtung (1) umfasst:
- einen Kraftsensor (60), der die von dem Stützkopf (50) ausgeübten Kräfte misst;
- Mittel zum Messen einer Position des Stützkopfes (50) entlang der Translationsachse (T);
und dadurch, dass sie ein elektronisches System (7) umfasst:
- Antriebsmittel (70) des Elektromotors (51), die so konfiguriert sind, dass sie den Stützkopf (50) in mindestens zwei unterschiedliche Positionen bringen, die zwei verschiedenen angelegten Kräften entsprechen, in denen der Fahrdraht (C) einen Winkel einnimmt;
- erste Mittel (71) zur Berechnung einer berechneten Steifigkeit (RC) des Fahrdrahtes (C) aus einer Differenz zwischen den beiden unterschiedlichen Positionen;
- zweite Mittel (72) zur Berechnung der Ist-Spannung (TR) des Fahrdrahtes (C) aus der berechneten Steifigkeit (RC) und einer Umrechnungsfunktion (P1, P2, P3) einer Steifigkeit in eine mechanische Spannung.

2. Vorrichtung (1) nach dem vorhergehenden Anspruch, **dadurch gekennzeichnet, dass** sie eine Stange (3) und einen von der Stange (3) getragenen Rahmen (2) umfasst, wobei der Rahmen (2) die Aufhängungsmittel (4), das Organ (5) zum Aufbringen einer Biegekraft, den Kraftsensor (60) und die Mittel zum Messen, aufweist.

3. Vorrichtung (1) nach dem vorhergehenden Anspruch, **dadurch gekennzeichnet, dass** das elektronische System (7) eine mobile elektronische Einheit (8) umfasst mit einer Anzeige (80), wobei die elektronische Einheit (8) drahtlos mit dem Rahmen (2) kommuniziert.

4. Vorrichtung (1) nach einem der Ansprüche 2 und 3, **dadurch gekennzeichnet, dass** sie Mittel zum Koppeln und Entkoppeln (30) des Rahmens (2) mit der Stange (3) umfasst, wobei der Rahmen (2) eine elektrische Batterie (20) umfasst.

5. Vorrichtung (1) nach dem vorhergehenden Anspruch, **dadurch gekennzeichnet, dass** die Mittel zum Koppeln und Entkoppeln (30) einen Aktuator zum Bestätigen einer Kopplung umfassen, wobei der Aktuator mit dem elektronischen System (7) gekoppelt ist und die Antriebsmittel (70) des Elektromotors (51) auch so konfiguriert sind, dass sie eine Kraft ausüben, um den Rahmen (2) in einer aufgehängten Position zu halten, wenn der Aktuator nicht aktiviert wird.

6. Vorrichtung (1) nach einem der vorhergehenden Ansprüche, **dadurch gekennzeichnet, dass** das elektronische System (7) mit einer Vielzahl von Umrechnungsfunktionen (P1, P2, P3) einer Steifigkeit in eine mechanische Spannung programmiert ist, wobei jede Umrechnungsfunktion (P1, P2, P3) spezifisch für eine Art von Fahrdraht (C) und/oder einen Abnutzungszustand des Fahrdrahtes (C) ist, wobei das elektronische System (7) Mittel zur Auswahl (74) einer der von den zweiten Mitteln (72) zur Berechnung auszuführenden Umrechnungsfunktionen (P1, P2, P3) umfasst.

7. Vorrichtung (1) nach einem der vorhergehenden Ansprüche, **dadurch gekennzeichnet, dass** die Umrechnungsfunktion oder-funktionen (P1, P2, P3) die Form Y = a.X + b haben,
wo:
- der Parameter Y die berechnete Steifigkeit (RC) ist;
- der Parameter X die tatsächliche Ist-Spannung (TR) ist;
- der Parameter a ein Richtungskoeffizient ist;
- der Parameter b der Achsenabschnitt ist.

8. Vorrichtung (1) nach einem der Ansprüche 1 bis 6, **dadurch gekennzeichnet, dass** die oder jede Umrechnungsfunktion (P1, P2, P3) die Form einer Korrespondenztabelle zwischen einer Steifigkeit und einer mechanischen Spannung hat.

9. Vorrichtung (1) nach einem der vorhergehenden Ansprüche, **dadurch gekennzeichnet, dass** sie zwei Führungszungen (9) aufweist, die sich seitlich in einem Winkel von den Anschlägen (40) erstrecken, wobei die Führungszungen (9) Haken, die zum Einhaken des Fahrdrahtes (C) geeignet sind, bilden.

10. Vorrichtung (1) nach einem der vorhergehenden Ansprüche, **dadurch gekennzeichnet, dass** sie einen Temperatursensor (62) des Fahrdrahtes (C) umfasst, wobei die zweiten Mittel (72) zur Berechnung eine Temperaturmessung integrieren, um die Ist-Spannung (TR) zu erhalten.

11. Verfahren zur Bestimmung einer Ist-Spannung (TR) eines Fahrdrahtes (C) einer Oberleitung, die sich über ein Eisenbahngleis erstreckt, wobei das Verfahren umfasst:
- einen ersten Schritt zum Aufbringen (E1) einer Biegekraft auf einen Teil des Fahrdrahtes mit einer ersten vordefinierten Kraft (F1);
- einen ersten Schritt zum Messen (M1) einer ersten radialen Verschiebung (D1) des Fahrdrahtabschnitts, die während des ersten Anwendungsschritts entsteht;
- einen zweiten Schritt zum Aufbringen (E2) einer Biegekraft auf den Teil des Fahrdrahtes mit einer zweiten vordefinierten Kraft (F2);
- einen zweiten Schritt zum Messen (M2) einer zweiten radialen Verschiebung (D2) des Fahrdrahtabschnitts, die während des zweiten Anwendungsschritts entsteht;
- einen ersten Berechnungsschritt (CAL1) zur Bestimmung einer berechneten Steifigkeit (RC) des Fahrdrahtes aus einer berechneten Differenz zwischen der zweiten radialen Verschiebung (D2) und der ersten radialen Verschiebung (D1) der ersten Kraft (F1) und der zweiten Kraft (F2);
- einen zweiten Berechnungsschritt (CAL2) zur Bestimmung der Ist-Spannung (TR) aus der berechneten Steifigkeit (RC) und einer Umrechnungsfunktion (P1, P2, P3).

12. Verfahren nach dem vorhergehenden Anspruch, **dadurch gekennzeichnet, dass** es einen vorherigen Schritt zum Messen der Dicke des Fahrdrahtes (C) und einen Schritt zum Auswählen der Umrechnungsfunktion (P1, P2, P3) aus einer Vielzahl von Umrechnungsfunktionen (P1, P2, P3) umfasst, die im zweiten Berechnungsschritt (CAL2) in Abhängigkeit von der Dicke des Fahrdrahtes (C) ausgeführt wird.

## Claims

1. A device (1) for determining an actual mechanical tension (TR) of a contact wire (C) of an overhead line extending above a railway track, the device comprising:
- means (4) for suspending the device (1) on the contact wire (C), the suspension means (4) comprising two stops (40) including a first fixed stop (41) and a second fixed stop (42) intended to rest on the contact wire (C);
- a member (5) for applying a bending load comprising a bearing head (50) movable along an axis of translation (T) located between the two stops (40) and intended to be perpendicular to a section of the contact wire (C) extending between the two stops (40), the bearing head (50) being prone to impart an angle to the contact wire (C) located between the two stops (40);
**characterised in that** the member (5) for applying a bending load comprises an electric motor (51) movably driving the bearing head (50), the device (1) comprising:
- a force sensor (60) measuring forces applied by the bearing head (50);
- means for measuring a position of the bearing head (50) along the axis of translation (T);
and **in that** it comprises an electronic system (7) comprising:
- means (70) for controlling the electric motor (51) configured to drive the bearing head (50) to at least two distinct positions corresponding to two different applied forces in which the contact wire (C) takes an angle;
- first means (71) for computing a computed stiffness (RC) of the contact wire (C) from a difference between the two distinct positions;
- second means (72) for computing the actual mechanical tension (TR) of the contact wire (C) from the computed stiffness (RC) and from a function (P1, P2, P3) for converting a stiffness into a mechanical tension.

2. The device (1) according to the preceding claim, **characterised in that** it comprises a pole (3) and a frame (2) carried by the pole (3), the frame (2) having the suspension means (4), the member (5) for applying a bending load, the force sensor (60), and the measuring means.

3. The device (1) according to the preceding claim, **characterised in that** the electronic system (7) comprises a mobile electronic unit (8) having a screen (80), the electronic unit (8) wirelessly communicating with the frame (2).

4. The device (1) according to any one of claims 2 and 3, **characterised in that** it comprises means (30) for coupling and decoupling the frame (2) with the pole (3), the frame (2) comprising an electric battery (20).

5. The device (1) according to the preceding claim, **characterised in that** the coupling and decoupling means (30) comprise an actuator for confirming a coupling, the actuator being coupled to the electronic system (7) and the control means (70) of the electric motor (51) being also configured to exert a load for holding the frame (2) in a suspended position in the absence of an activation of the actuator.

6. The device (1) according to any one of the preceding claims, **characterised in that** the electronic system (7) is programmed with a plurality of functions (P1, P2, P3) for converting a stiffness into a mechanical tension, each conversion function (P1, P2, P3) being specific to a contact wire (C) type and/or to a wear condition of the contact wire (C), the electronic system (7) comprising means (74) for selecting that one amongst the conversion function (P1, P2, P3) to be implemented by the second computing means (72).

7. The device (1) according to any one of the preceding claims, **characterised in that** the conversion function(s) (P1, P2, P3) are in the form Y=a.X+b,
where:
- parameter Y is the computed stiffness (RC);
- parameter X is the actual mechanical tension (TR);
- parameter a is a slope coefficient;
- parameter b is the vertical intercept.

8. The device (1) according to any one of claims 1 to 6, **characterised in that** the or each conversion function (P1, P2, P3) is in the form of a table of correspondence between a stiffness and a mechanical tension.

9. The device (1) according to any one of the preceding claims, **characterised in that** it has two guide legs (9) extending laterally obliquely from the stops (40), the guide legs (9) forming hooks adapted to enable hooking of the contact wire (C).

10. The device (1) according to any one of the preceding claims, **characterised in that** it comprises a sensor (62) for the temperature of the contact wire (C), the second computing means (72) integrating a temperature measurement to obtain the actual mechanical tension (TR).

11. A method for determining an actual mechanical tension (TR) of a contact wire (C) of an overhead line extending above a railway track, the method comprising:
- a first step (E1) of applying a bending load on a portion of the contact wire at a predefined first force (F1) ;
- a first step (M1) of measuring a first radial displacement (D1) of the portion of the contact wire imparted during the first application step;
- a second step (E2) of applying a bending load on the portion of the contact wire at a predefined second force (F2) ;
- a second step (M2) of measuring a second radial displacement (D2) of the portion of the contact wire imparted during the second application step;
- a first computation step (CAL1) to determine a computed stiffness (RC) of the contact wire from a computed difference between the second radial displacement (D2) and the first radial displacement (D1), from the first force (F1) and from the second force (F2);
- a second computation step (CAL2) to determine the actual mechanical tension (TR) from the computed stiffness (RC) and from a conversion function (P1, P2, P3) .

12. The method according to the preceding claim, **characterised in that** it comprises a prior step of measuring the thickness of the contact wire (C), and a step of selecting the conversion function (P1, P2, P3), amongst a plurality of conversion functions (P1, P2, P3), to be implemented in the second computation step (CAL2) according to the thickness of the contact wire (C).
